Europäisches Patentamt

(19) European Patent Office

Office européen des brevets

(11) Publication number: **0 144 210**
**A2**

(12) ## EUROPEAN PATENT APPLICATION

(21) Application number: **84308249.6**

(22) Date of filing: **28.11.84**

(51) Int. Cl.⁴: **G 11 B 7/24**
**//G11B7/26**

(30) Priority: **02.12.83 US 557711**

(43) Date of publication of application:
**12.06.85 Bulletin 85/24**

(84) Designated Contracting States:
**BE DE FR GB IT NL SE**

(71) Applicant: **BURROUGHS CORPORATION (a Delaware corporation)**
**Burroughs Place**
**Detroit Michigan 48232(US)**

(72) Inventor: **Lee, Neville**
**3472 Avenue Ladera Thousand Oaks**
**California 91362(US)**

(74) Representative: **Kirby, Harold Douglas Benson et al,**
**G.F. Redfern & Company Marlborough Lodge 14**
**Farncombe Road**
**Worthing West Sussex BN11 2BT(GB)**

(54) **Cost-reduced optical disk record.**

(57) A novel optical data storage medium is contemplated, one apt for data-modulated writing with a laser beam of predetermined energy and wavelength -- the embodiments here described being characterized by an optical record structure laid upon each face of a substrate-thickness -- and in some cases, this being attached to any rigid carrier means.

FIG.5.

- 1 -

COST-REDUCED OPTICAL DISK RECORD


This is a Continuation-in-Part of my pending application U.S.S.N. 499,924 filed 1 June 1983 for "Cost-Reduced Optical Memory Disk", which is in turn a Continuation-in-Part of my other pending application U.S.S.N. 319,406 filed 9 November 1981 for "Archival Recording Media for Digital Data Storage Using Low Power Radiation", both being commonly assigned and herewith incorporated within this reference.

The present invention relates to a novel high density information storage medium, and more particularly to such a medium as cost-reduced and adapted for recording with low-power laser means.

INTRODUCTION, BACKGROUND:

Workers in the art of recording, storing and detecting and retrieval of digital information are increasingly concerned with optical techniques; e.g., whereby a special "optical digital data" (ODD) disk may be used for such. By analogy such data is conventionally stored today on magnetic disks for use with high speed digital computers.

0144210

This disclosure relates to novel optical recording media and associated apparatus adapted to record, and read-back, digital information using a beam of prescribed radiation energy; it especially relates to such which are cost-reduced and are suited for low power laser equipment.

Workers will agree that the success of an ODD system depends greatly on the storage medium. Workers in the art have, for some time now, pondered how to develop a satisfactory practical ODD disk medium, especially one that is cost-effective and adapted for the low power laser equipment presently available. This invention teaches a novel practical low-cost, mass producible ODD disk design adapted for such purposes.

I have discovered a new optical recording disk design which is surprisingly inexpensive to fabricate, especially as compared with the media described in my cited U.S.S.N. 319,406 -- those media being characterized for the most part as "Winchester" (disk) media since they generally contemplated a rigid aluminum Winchester disk as the carrier and as the substrate for deposition of recording layers. Here, in contrast, I contemplate deposition on the "protective cap" or the like.

Such media will be seen as apt for "non-ablative" recording, i.e., wherein the optical properties of a recording layer are permanently altered by laser heating without need for massive translation or expulsion of material. This hole-formation mechanism is detailed in U.S.S.N. 319,406; it is compatible with an in-contact overcoat, so that a continuous media structure can be employed without need for "air spaces". With this type of concept, an extremely flexible design can be achieved; e.g., in which substrate dimensions and R/W wavelength can easily be tailored for various applications. Furthermore, a very simple media structural concept is taught wherein there is no need to produce a disk surface exhibiting high optical flatness and regularity.

As a feature hereof, I contemplate the use of novel structure, materials, and fabrication methods for such records, especially those exhibiting extended archival life (i.e., which are highly resistant to oxidation or like environmental degradation, during the contemplated use). Thus, little or no "loss" of recorded information should occur over extended (storage) life -- with reflectivity-shifts remaining large enough, and stable enough, to "read". And, novel simplified disk fabrication is taught whereby the disk cost may be significantly reduced and fabrication simplified -- with mass-fabrication being feasible (as opposed to the present practice of "batch-fabrication").

The novel recording media taught herein will be generally assumed as meeting the foregoing criteria; and, where possible, as also meeting one or more of the "Target" performance criteria presented in Table I below. (See also "Optical Properties of Tellurium Films Used for Data Recording" by Ash and Allen, SPIE, Vol. 222, 1980).

0144210

### TABLE I (Target Media Criteria)

1. "High" Sensitivity:
   -- allow recording with moderate-power laser means. "Sensitivity" will be understood as minimum laser power needed for bit formation (change in spot reflectivity, akin to that resulting from formation of a hole, or other void or like change in medium, giving adequate read-out at contemplated recording rate). With the invention, one may typically "write" with a pulse of moderate laser power for a reasonable pulse period -- and not be degraded by read-out (e.g., on repeated playback).

1-A. High S/N: (Adequate read-out):
   Signal to noise ratio (for adequate read-out); on the order of about 10-40 dB or more.

2. "Archival Stability":
   Able to be used or stored for several years in "normal computer environment" and maintain minimum read-out quality.

3. "Computer Records":
   Assume capability to operate with present day high speed digital computers -- e.g., with comparable capabilities to today's magnetic disk storage equipment (cf. high bit density, etc.).

4. "Deposit-able" -- associated film structure can be deposited on a "commercial scale" to give repeatable, controlled characteristics.

5. Overcoat-protected: Absorber film will be covered (e.g., up to a few mils) to mechanically protect it and defocus "surface dirt" without sacrificing above features, e.g., still give adequate read-out (preferably overcoat can also impede heat and contaminant-gases, etc., from reaching absorber film).

6. Minimum Cost:

Thus, it is an object hereof to provide the foregoing, and other related, features and advantages. A more particular object is to do so teaching low-cost ODD media. Another object is to teach such media which is readily mass-produced and which exhibits good sensitivity, even with low-power lasers, as well as giving extended archival life. A further object is to teach fabrication of such media as disks from continuous web substrates. Another related object is to do so while stamping-out one or several ODD disks at a time from a common web structure.

BRIEF DESCRIPTION OF THE DRAWINGS

These and other features and advantages of the present invention will be appreciated by workers as they become better understood by reference to the following detailed description of the present preferred embodiments, these being considered in conjunction with the accompanying drawings, wherein like reference symbols denote like elements:

FIGS 1 and 2 provide a cross-sectional, enlarged view of an idealized portion of my prior ODD recording disk;

FIGS. 4 and 5 are like views of a related kind of disk modified according to the invention;

FIG. 6A is a more schematic representation of an associated fabrication mode; while FIGS. 6B, 7, 8 and 9 are like representations of respective alternative fabrication modes;

FIG. 10 is a schematic illustration of how record disks according to such embodiments can be stamped-out -- a pair of such disks being indicated in FIG. 11, while FIGS. 3 and 12 indicate alternative fabrication.

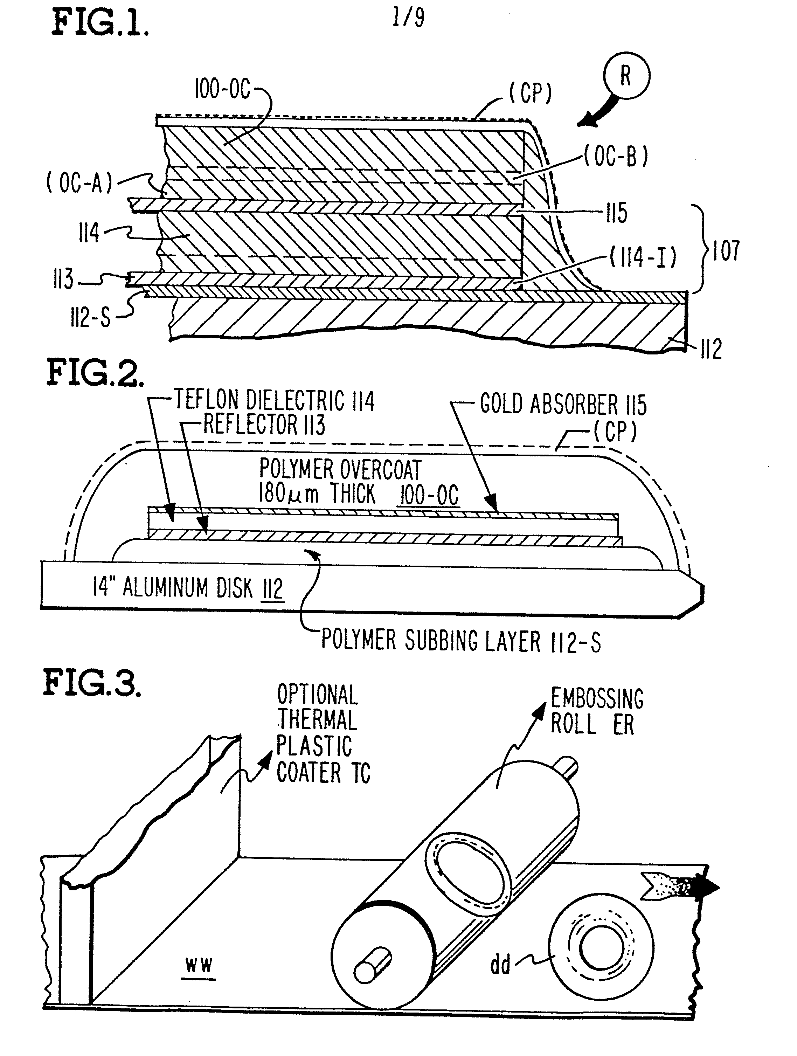

--Example A: prior ODD disk; FIGS. 1, 2:

FIG. 1 depicts, in fragmentary idealized section, an improved ODD disk record R, apt for use in "low power" R/W laser systems (e.g., of the type shown and described in U.S.S.N. 319,406 -- also see schematic side view of full disk in FIG. 2). Record R comprises a substrate disk 112 on which is disposed a "tri-layer" 107 including a "gold island" absorber film 115 atop an anti-reflective optical substrate comprising a dielectric spacer layer 114 on a reflector layer 113. These elements and the associated materials, operations, etc., may be understood as essentially the same as in comparable Examples of U.S.S.N. 319,406 except as otherwise stated. Record R is capped with (encapsulated in) an overcoat 100-oc upon absorber 115. Further details are as follows.

Substrate disk 112 is preferably a well-known bulky, rigid, relatively costly metal Winchester disk of the type presently used for magnetic recording in computer systems (aluminum alloy, 14" diameter, highly polished carrier surface). A "standard" 14" disk 112 was prescribed to better accommodate several gigabytes storage per recording surface. Salient characteristics of the aluminum substrate are its availability, its flatness and its ability to withstand environmental requirements and to accommodate rotation at speeds above 2000 rpm.

While such an aluminum substrate meets most of the gross mechanical requirements, its surface smoothness is not sufficient ("optical flatness" needed), even when it is diamond turned. Thus, at least one subbing layer (112-S) is usually added. This preferably comprises at least one relatively thin polymer subbing coat 112-S, spin-coated onto the surface of disk 112 and then cured (e.g., with UV radiation). This polymer subbing layer can provide the required "optically-flat" surface (low roughness). The subbing will be selected on the basis of achievable performance, good environmental characteristics and the ease of application and cure. This "subbing layer" is adapted, as known in the art, to provide a smooth surface for deposition of reflector layer 113.

--Tri-layer: Au isles - on Teflon - on Reflector:

This tri-layer optical structure is a tuned optical network consisting of three primary layers. As mentioned, reflector 113 and spacer 114 serve to provide an anti-reflective base on which absorber film 115 is applied, to complete the known "tri-layer". Here, spacer 114 preferably comprised a transparent "modified fluoropolymer", or a like organic, of "tri-layer thickness".

The first layer deposited is a reflector layer 113 adapted to be highly reflective at the subject wavelengths, (e.g., aluminum is known for this) laid atop subbing 112-S. On reflecting layer 113, is laid a "quarterwave thickness" of spacer 114 (e.g., "modified Teflon") which, as workers know, has a thickness adapted to tune the structure to achieve a minimum reflectance with the absorber layer 115 (which is deposited atop spacer 114). Such an organic spacer can also serve as a "thermal barrier", to help prevent reflector 113 from draining any appreciable energy from absorber 115 (stable under such heating).

Absorber layer 115 preferably comprises an absorber metal (e.g., pure gold preferred, or like absorber compatible with in-contact overcoat), vapor-deposited in island form (to yield "first minimum reflectance depth", etc.). The combination of the absorber, dielectric spacer and reflector provide an optically tuned network which has a prescribed minimal reflectance at the desired wavelength. This particular design may be understood as optimized for a R/W beam from a 633 nanometer Helium-Neon laser, and also to optimize archival qualities.

Using a "modified Teflon" or a like stable, "less rigid" elastomer as the dielectric material 114 can further enhance archival performance and give superior high temperature stability, as well as minimizing moisture absorption. The spacer material will be compatible with the absorber, draw a minimum of heat from it and facilitate good sensitivity, while bonding well with the subjacent reflector 113. This structure, and associated material selection provides a highly sensitive structure tuned to a minimum reflectance (for maximum absorption) at the laser writing wavelength, while also providing good protection from moisture and other contamination, as is needed for an OD disk of archival quality.

--Polymer overcoat:

After vacuum deposition of the three optical layers, a relatively thick polymer overcoat 100-oc is next applied on absorber 115, to "encapsulate" tri-layer 107 and seal with subbing 112-S. Overcoat 100-oc is intended to function, as known in the art, as a scratch-resistant, seal and barrier to intrusion of contaminants (e.g., water, oxygen vapors) as well as to "defocus" dirt and grime thereon and to accommodate "agglomeration" of the absorber.

That is, one may optically-eliminate (or at least reduce) the effects of surface dust, etc. (on 100-oc) by simply making it thick enough (and transparent to $\lambda$o) to throw it out of focus when absorber 115 is illuminated. Thus, any dust particles settling on the overcoat surface will be displaced far enough from the focal plane of the optical system as to have no appreciable effect on read/write operations.

- 9 -

0144210

Overcoat 100-oc preferably comprises about 180 microns of a suitably-transparent polymer able to maintain good "thickness-control" (e.g., to within about 10-15 microns), being thick enough to accommodate relatively large dust particles. The 180 micron thick overcoat 100-oc will also preferably be covered with a surface wear-cap layer cp adapted for resisting scratches and wear, while inhibiting large dust particles from settling on the outer surface of the overcoat.

Now, workers will recognize that one will use such a record by rotating it (e.g., 1800 rpm contemplated) while using a laser Write Beam to write on a number of information tracks, each track comprising a succession of spaced "bit-sites" ("Transitions" written, there, as reflectivity changes), separated by unwritten areas in which the reflectivity of the absorptive layer 115 is undisturbed (generally as described in S.N. 319,406).

For read-out, a laser beam of relatively constant (reduced) intensity and prescribed wavelength is likewise focused on the information track comprising these bits at the absorber layer as the disk is rotated. Thus a bit can represent a "one" where the write-beam has switched reflectivity along this track; otherwise a "zero" may be understood. The read laser will apply energy insufficient to so change spot reflectivity, and at a frequency at which the undisturbed regions of the track exhibit an "anti-reflective" condition. A photo detector is positioned to receive light reflected from the passing "bit sites" being used, as known to develop an output signal representing the so-recorded "bits". The reflectance changes need only be sufficient to give the needed minimal read-out contrast (e.g., S/N ratio that can be tolerated in the contemplated playback mode).

--Hole-forming (bit-recording) via "agglomeration":

Workers will appreciate that "island" absorber films like these described evidently can be used in a novel advantageous way so that the described low-power/low temperature (laser-beam) heating thereof at a "bit site" can form a "spot" or "hole". These can be used like the well-known "ablated holes" (e.g., as with a Te absorber) but are formed quite differently. That is, "hole-forming" with such "islands", unlike ablative hole-formation, requires no gross migration of absorber material to the edge of the "bit site" or expulsion therefrom. Instead the so-written island material is intended to remain within the bit site, moving very little, especially when covered by an overcoat. That is, when so (slightly) heated to record a "bit" or "hole", the "islands" merely "agglomerate" (mostly) within the bit-site region and shift a bit, rearranging (most of) their mass there, to irreversibly alter optical properties there -- without need for gross migration of material and with little or no ejection of absorber (further details in U.S.S.N. 319,406).

By contrast, examples of various other known methods and approaches may be seen in the following references:

| Patent No. | Inventor(s) |
|------------|-------------|
| 4,216,501 | Bell |
| 4,232,337 | Winslow, et al. |
| 4,243,848 | Utsumi |
| 4,243,850 | Edwards |
| 4,253,019 | Opheij |
| 4,253,734 | Komurasaki |
| 4,268,745 | Okano |

and in:

- 11 -                                    0144210

R.A. Bartolini, et al., "Optical Disk Systems Emerge",
IEEE Spectrum, August 1978, pp. 20-28.
G.C. Kenney, et al., "An Optical Disk Replaces 25 Mag
Tapes", IEEE Spectrum, February 1979, pp. 33-38.
K. Bulthuis, et al., "Ten Billion Bits on a Disk",
IEEE Spectrum, August 1979, pp. 26-33.
A.E. Bell, et al., "Antireflection Structures for Optical
Recording", IEEE Journal of Quantum Electronics,
Vol. QE-14, No. 7, July 1978, pp. 487-495.

The subject matter of these references is to
be considered as incorporated herein, as is that of
all other references.

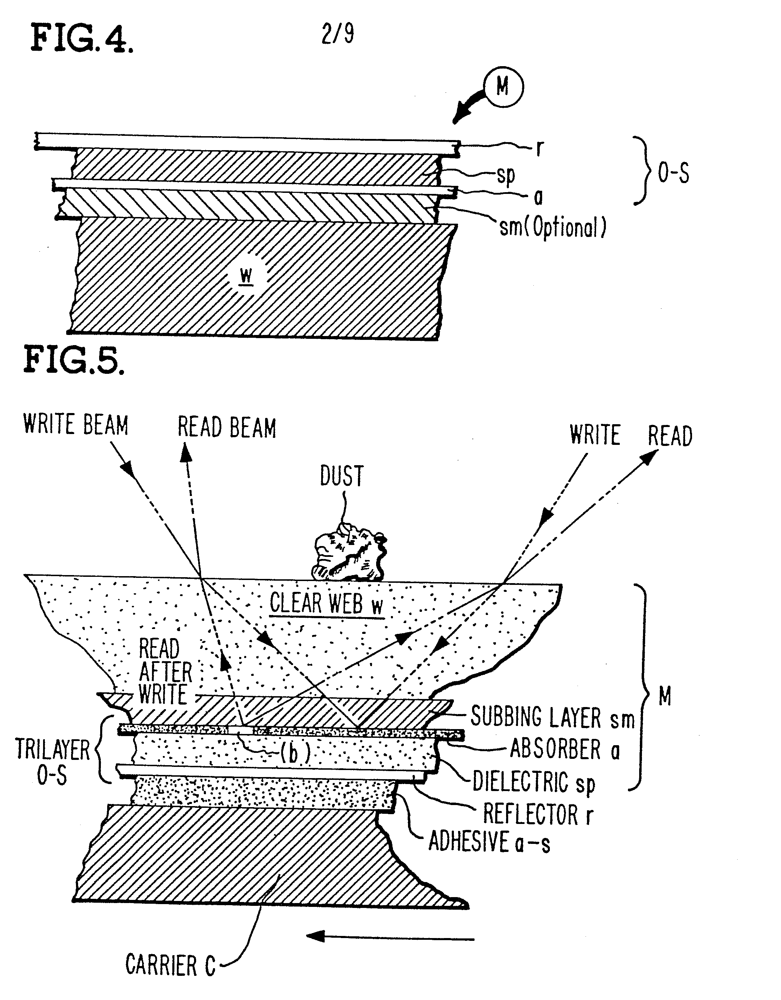

Embodiment I, (FIGS. 4, 5, 6B):

This, and the other, embodiments will be understood
as constructed and used as described in U.S.S.N. 319,406
except insofar as otherwise stated.

One feature is that the optical recording
structure O-S is deposited on a transparent sheet w to
form a memory structure M. That is, structure O-S (FIG. 4),
comprising absorber layer a, covered by dielectric spacer
layer sp, on which reflector layer r is laid ( -- compare
layers 115, 114, 113, respectively, of FIG. 1, for example)
is deposited on a sheet w, which preferably comprises a
web of clear organic material continuously drawn through
deposition stations as indicated below. A "smoothing/
bonding" film sm (optional) may be applied on web w as
required for adequate smoothness and/or bonding to absorber
film "a". Layer sm can also be used to enhance island-
deposition and improve sensitivity and S/N (according to
material selected -- details below). Spacer layer sp is
then laid atop absorber a, followed by reflector r,
atop sp.

The foregoing is in contradistinction to the embodiments of FIGS. 1, 2 and U.S.S.N. 319,406, where the optical recording structure was deposited on a polished, smoothed aluminum disk surface (e.g., in FIG. 1, reflector 113 deposited on smoothing layer 112-S of aluminum disk 112; then spacer 114 on 113, then absorber 115 on spacer 114, then overcoat 100-oc atop absorber 115).

Thus, in contrast with such "on-disk" deposition, the subject embodiment (FIG. 4) may be characterized as an "inverted tri-layer", the order of deposition being reversed.

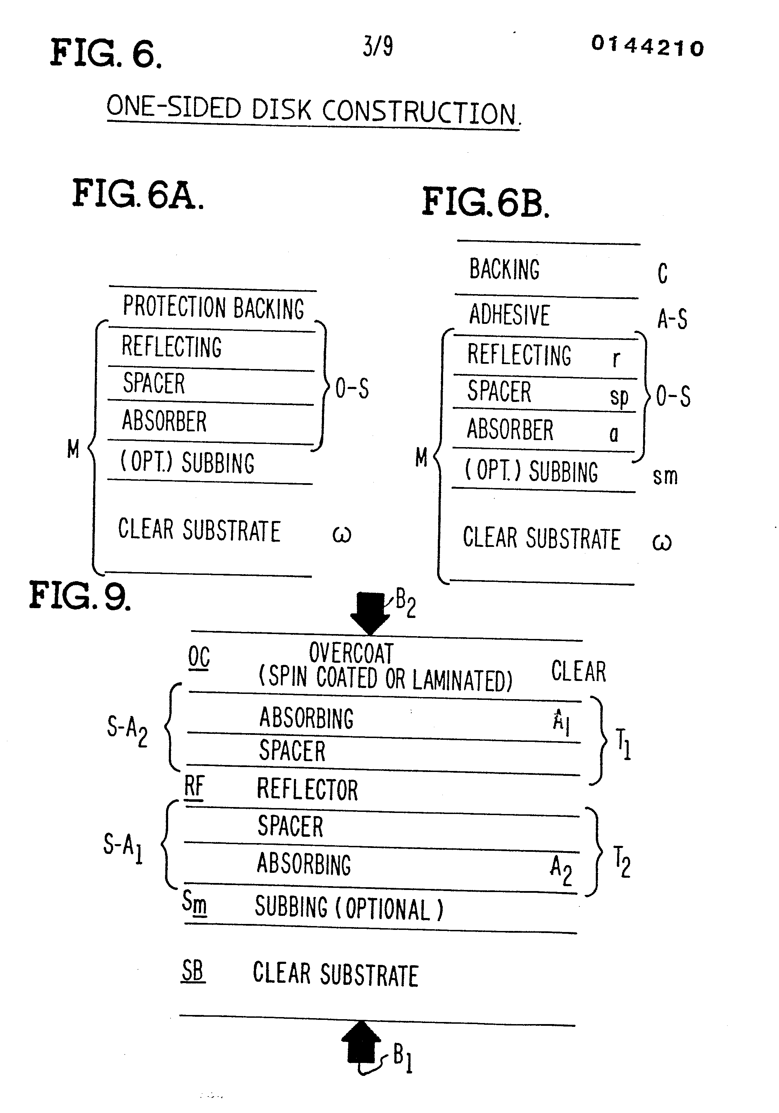

Here the substrate web w is also serving as a protective overcoat (or "cap") for the conventional tri-layer. Therefore, the selection of substrate material is extremely important; it can influence the entire coating process downstream. The substrate w should be clear, with low transmission loss at read/write laser wavelengths. It should be free of any form of aberration, defect or birefringences. The surface of the substrate should be very flat, smooth, and free of scratches, digs, or contaminations. The substrate should have very tight thickness control (high uniformity). The thickness (e.g., for defocusing surface dust) will depend on the specific optical system employed as workers know. It is important that the material is chemically and mechanically stable. The substrate should be strong, resistant-to-scratch and should not attract dust particles (e.g., see FIG. 5).

Thus, once the optical R/W structure O-S has been so formed upon a clear substrate-cover w (e.g., as in FIG. 4), the resulting memory structure M may now be attached to a "backing" or carrier means (e.g., a metal disk) as suggested by the FIG. 6B diagram.

Continuous Web Substrate:

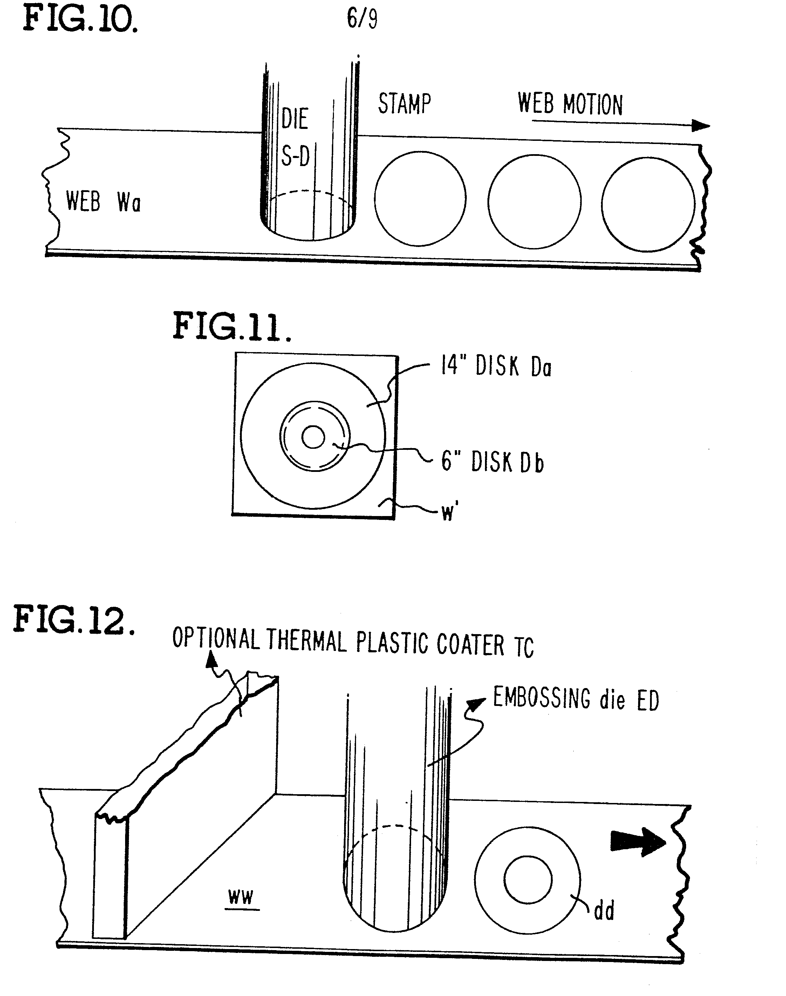

Although not necessary, it is here preferred to employ a "continuous" fabricating process, using flexible polymer web w as "substrate-cap" (like results can also be obtained by a similar process described for an "injection-molded" substrate; the difference is that one coats on a continuous web instead of an individual sheet). After the complete structure has been made, a disk with any desirable dimension can be stamped-out as noted elsewhere. It is interesting to note it is possible to simultaneously stamp out, for example, a six-inch disk within a 14" area without additional cost. This is illustrated in FIGS. 10 and 11.

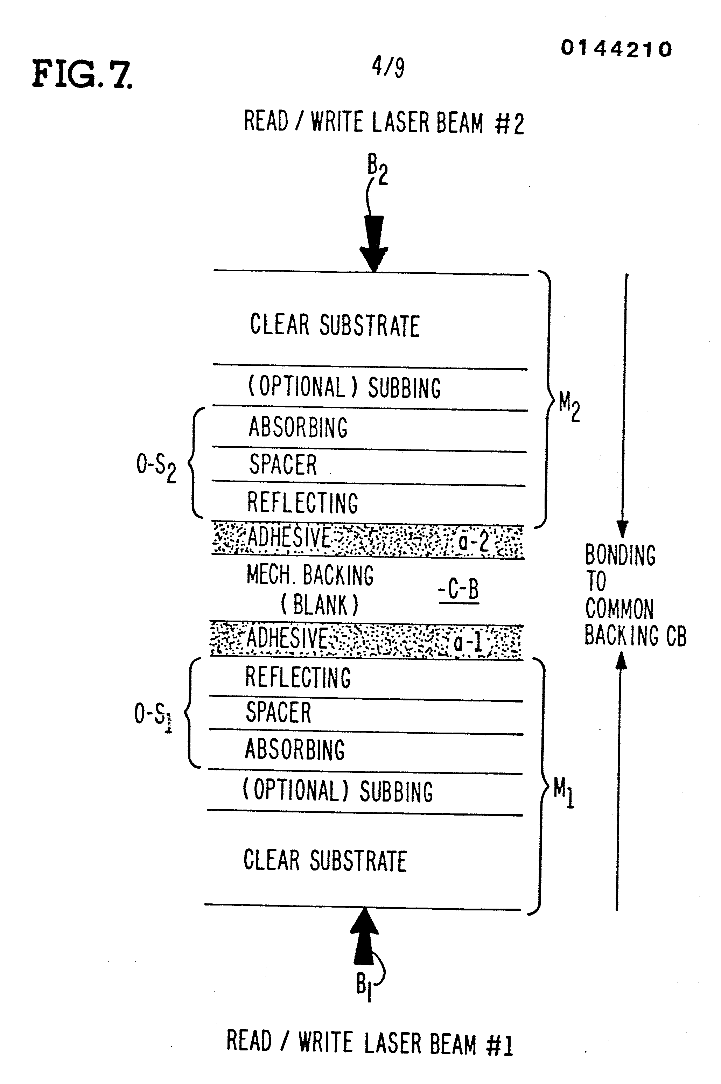

Though quality control may be better using injection molding, it is possible to emboss servotrack format information on the web. This is illustrated in FIGS. 9A and 9B, where an (optional) layer of a thermo-plastic is coated on the web before the embossing process. In FIG. 9A we show a "flat-plate embossing" process. In FIG. 9B we show a "roller printer" type of embossing (FIGS. 7-9 are further discussed below).

Subbing Layer Considerations:

While subbing thickness sm is not always required, it can serve three or more functions; it can improve the surface quality of the substrate; it can carry servotrack replication information as discussed above; and it can provide material more compatible with the hole formation mechanism in the absorbing layer so that the sensitivity and signal-to-noise can be optimized. Also, it can carry a nucleating surface-film adapted to enhance island-deposition.

Because of these various considerations, smoothing thickness sm may turn out to be a multiple layer deposited by mechanical and/or vacuum deposition. For example, to improve the surface quality, one can use UV curable polymer applied with mechanical means. For servotrack replication or embossing purposes, thermo-plastic may be preferred. To optimize sensitivity and signal-to-noise, a second "agglomeration-tolerant" overcoat material may be overlaid, to face the absorber film. The desired properties of this material are that it be soft or deformable (e.g., heat shrinkable or otherwise softened or made to accommodate agglomeration under the influence of heat). To control the hole forming process so that signal-to-noise is optimized, a "nucleating layer", like $SiO_2$, may be desirable next to the absorber.

Optical recording structure O-S may comprise the elements of the tri-layer described for U.S.S.N. 319,406 and FIGS. 1, 2 above.

Another feature of this embodiment is that a single memory structure M may be used to form a great many ODD disks (as noted below); disks may be mass-fabricated, and formed in a continuous process (also noted below, e.g., see FIGS. 10, 11). Also, memory structure M is, unlike comparable known structures, apt for fabrication apart from, and independently of, associated carrier means, such as a carrier disk (e.g., one need no longer worry about the merits of such a carrier as a deposition-substrate!). Also, such a carrier may be later coupled to one or several memory structures M.

Thus, as indicated (only diagrammatically) in FIG. 6B, memory structure M may be affixed to carrier means C (e.g., a metal disk, or a metal sheet from which a plurality of disks can be formed), such as via a suitable adhesive layer A-S (bonding to reflector film r). And, advantageously, optical structure O-S may be deposited (e.g., in a continuous line) on a web w of "cap material" which is relatively inexpensive, thin, flexible, and kept flat during deposition cycles (biased vs. a flat rigid pick-up plate at deposition coating stations) without regard to its "carrier-qualities". That is, since the so-formed structure(s) M may later be mounted on a separate carrier C, the carrier's surface flatness, smoothness, deposition-substrate-qualities, etc., can be ignored. In effect, and unlike prior fabrication techniques, such an approach "de-couples" the carrier from the ("optical") "load" and so "frees" the design considerably. For instance, workers are well award of the savings involved in replacing a mirror-surfaced Winchester disk with a thin plastic film (substrate web) which can easily be made flatter, smoother and more receptive to the precision coatings comprising optical structure O-S.

FIG. 5 depicts the kind of ODD disk typically resulting from the foregoing -- where the optical structure O-S is formed (in "inverted" form) on a thin web w (as in FIG. 4), then the result is affixed on a metal carrier or "backing" (FIG. 6B -- assume Winchester disk as carrier C).

In FIG. 5, the result will be understood as an ODD disk record after the manner of FIGS. 1, 2 (and U.S.S.N. 319,406), with translation indicated by the arrow. This example of operation assumes that an exemplary "agglomeration-bit" has already been written (see "void" at b) by a prescribed WRITE-beam, then translated to register with an associated READ-beam as indicated (for a "READ-AFTER-WRITE" mode of recording).

Mechanical Backing Consideration:

One can use aluminum blanks ("Winchester disks") as the mechanical backing (carrier). With such an aluminum blank, it will be more appropriate to stamp-out the memory structure M before laminating it to the aluminum blank C.

One may also use a rigid, stable (thermally- and mechanically-) polymer, such as polyetherimide as a less expensive backing. In such a case, it is easier to laminate the structure M to a sheet of backing before stamping-out the composite disk. This will make the procedures of lamination and registration less problematical.

Workers will recognize that such a substitute web w offers the possibility of a "continuous" fabrication sequence, especially for "memory structures" (e.g., to be individually bonded to a carrier disk) -- or for the complete disk in appropriate instances. This is indicated in the idealized web-stamping sequence indicated in FIG. 10, where the substrate web wa (e.g., web w of EX. I, FIG. 5, on which memory structure M has been fabricated) can be brought to a "stamping station" where a stamp-die S-D, or the like, is operated to cut-out (stamp) like disk shapes as known in the art.

Further, in certain cases, it will be appropriate to pre-attach a relatively rigid carrier strip (see metal carrier C in FIG. 5) to this web-memory configuration and cut-out the entire, composite disk in a single operation. FIG. 11 is a plan view of a relatively large disk Da to be cut-out of a web w, with the center-hole therefore used to simultaneously co-stamp a "small" disk DB, with its own center-hole (e.g., 14" disk and 6" disk as workers will understand).

--Embodiment II, FIG. 6A; (substrate = carrier):

Instead of a so-coupling the structure M to a metal carrier (FIGS. 6B, 5), one may in some cases (e.g., as a savings in cost) use the substrate w as its own carrier (e.g., increasing thickness, rigidity, etc., of w accordingly). In such a case one will likely wish to seal the "back side" of the reflector r (e.g., vs. intrusion of moisture, etc.; mechanical abrasion, etc.). Such is indicated (only diagrammatically) in FIG. 6A.

--Embodiment III, FIG. 7; (double-sided disk):

FIG. 7 shows (only very schematically) a modification of an embodiment like #I above (see FIG. 6B, especially) wherein the "backing" (see C in FIG. 6B) is adapted to carry not one, but two memory structures (being otherwise understood as similarly fabricated and used -- e.g., each side having its respective read/write means, etc.). More particularly, where one memory structure $M_1$, including optical unit O-S, is bonded to a carrier means C-B (via adhesive a-1) and·understood as operated upon by R/W beam #$B_1$ -- in like manner a second memory structure $M_2$ (including optical unit O-$S_2$) is similarly bonded to the opposite side of C-B (via associated adhesive means a-2), and operated upon by respective read/write beam #$B_2$. Cost-effectiveness can thus be enhanced, or course, where such a "two-sided" disk is practical.

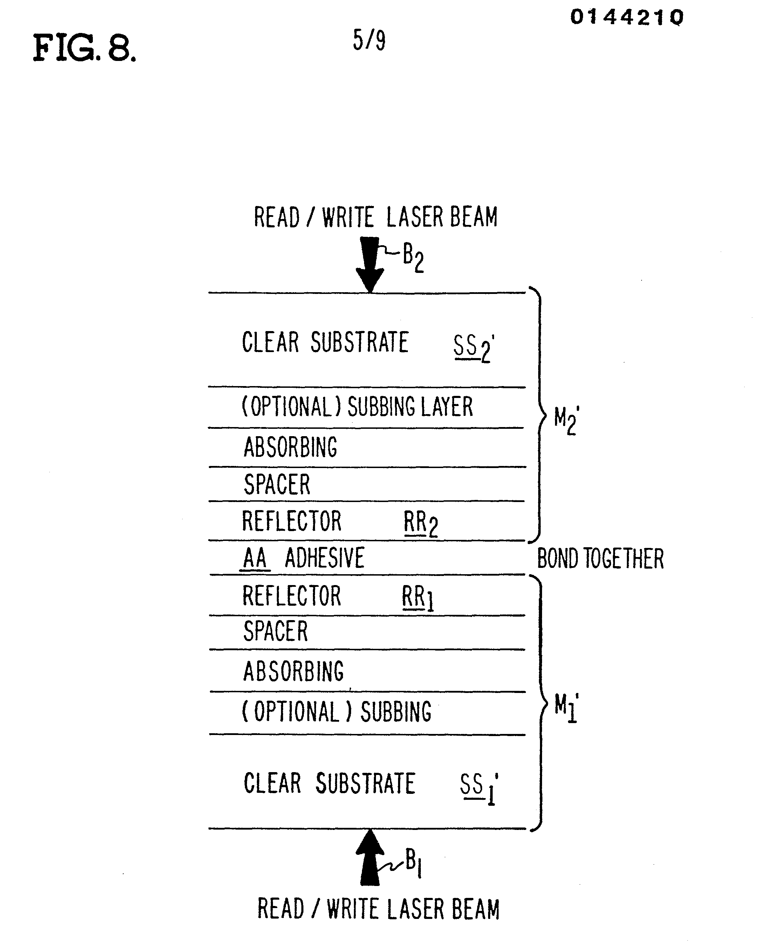

--Embodiment IV, FIG. 8:

And, FIG. 8 indicates a variant embodiment wherein the common backing C-B is eliminated and two such memory structures $M_1$, $M_2$ are inter-coupled with only a common adhesive thickness AA between. Here, it will be understood that the needed rigidity and mechanical strength will be otherwise supplied (e.g., by a more rigid substrate $SS_1$, $SS_2$ and/or by more rigid reflectors $RR_1$, $RR_2$).

--Embodiment V, FIG. 9:

FIG. 9 indicates a further variation whereby only one common reflector RF is provided -- to be used (e.g., via beams $B_1$, $B_2$ as before) in common by a pair of opposed "spacer-absorber" units S-$A_1$, S-$A_2$ -- all layers being deposited on common substrate SB, with a clear protective overcoat ("cap") OC being added opposite SB.

--Molded substrate:

As a (less-preferred) variation to the above described web-substrate, workers will appreciate that other techniques are, in many instances, feasible. For instance, one may mold a discrete substrate; e.g., using well-known "injection molding" techniques (and depositing on this). Good, optically-compatible, injection-molded substrates have been used for optical disks with air-sandwich structure, or with other media (e.g., with a single layer of absorber material).

One can use a similar approach for this "reverse tri-layer". In this approach, one can continue the vacuum coating process by depositing a spacer layer on the other side of the common reflecting layer RF of the existing tri-layer, and then an absorbing layer as shown in FIG. 9. Then a spin-coated overcoat OC (or laminated overcoat) can be applied, to thus produce a "double-sided disk". The advantage of this approach is that only one "pump down" is needed for all "vacuum processes" for a two-sided disk. Also, a common reflecting layer is used, which eliminates one layer of material and a coating step. The savings can be appreciable.

One of the important advantages of an injection molded substrate is that the servotracking and formatting information can be replicated by various molding processes. In this way, servowriting (on each disk) can be eliminated, with additional cost-savings resulting (e.g., as in FIG. 12 or FIG. 3).

FIG. 12 functionally suggests a related embossing, or like pattern-impressing operation for record disks, wherein a continuous-web ww (e.g., analogous to Wa in FIG. 10), will be understood as super-coated (or softened) at a coating station TC to present a relatively "malleable" surface to an embossing station where a die ED impresses a pattern thereon (and may also thermally-cut the disk dd from web ww) according to known techniques. FIG. 3 depicts essentially the same operation, except that (one or a plurality of) die impressions are rendered by a die roll ED in a known fashion.

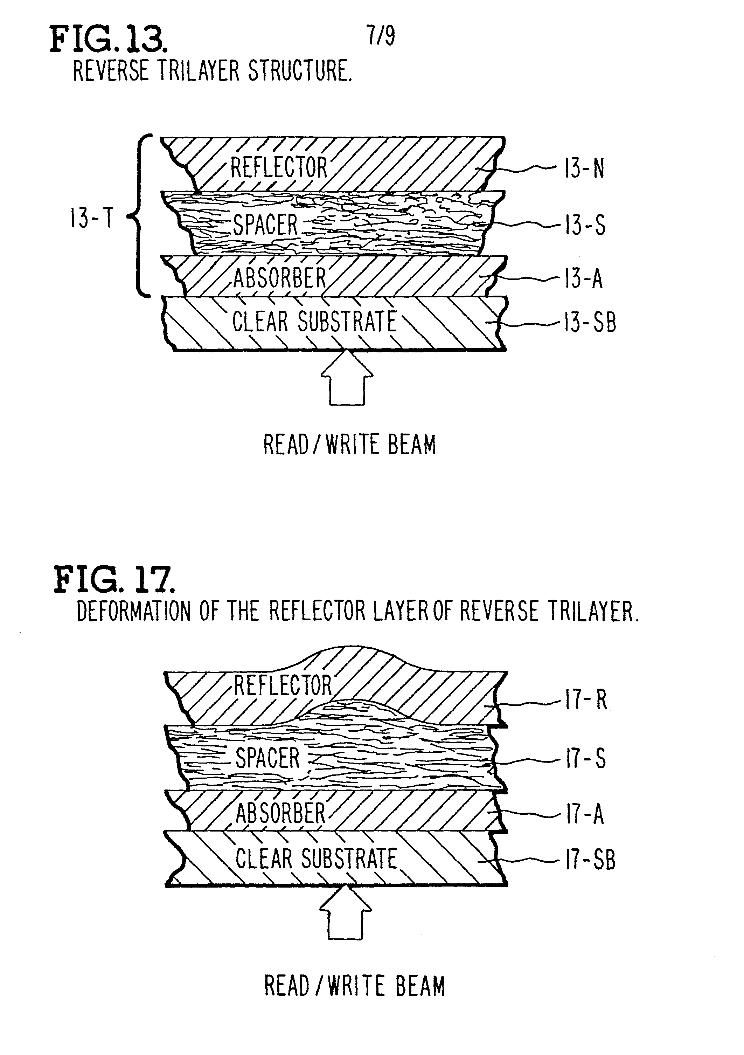

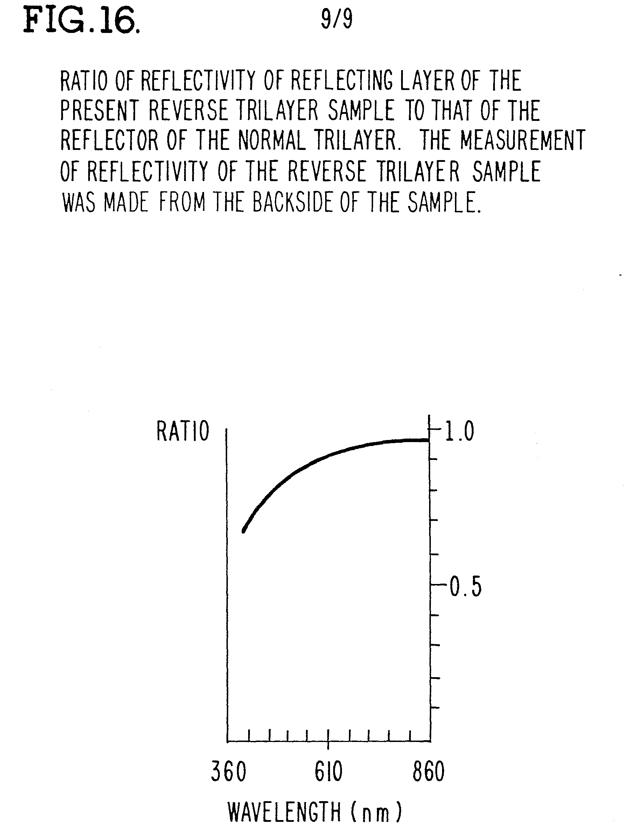

--Embodiment VI, FIG. 13:

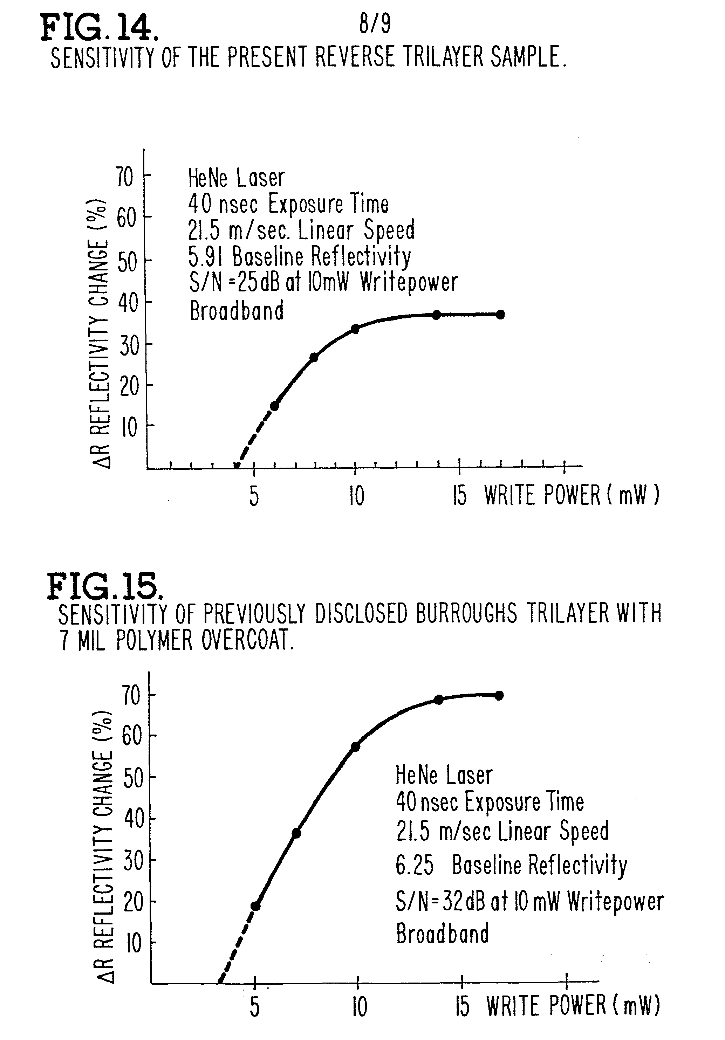

To further demonstrate the concept, a gold reverse trilayer 13-T (cf. absorber 13-A, spacer 13-S, reflector 13-R -- see FIG. 13) is deposited using a 7 mil thick microscrope glass slide 13-SB as substrate. Test results are shown in FIG. 14. The testing condition is 40nsHeNe laser pulse, optically focused by a 0.65NA overcoat corrected objective ($\sim$0.6$\mu$m FWHM beam size). The sample is mounted on a rotational chip tester that generates surface linear velocity of 21.5 M/S. Threshold occurred at 4.5mW, and the maximum change of reflectivity is 36 percent.

Although the performance based on this sample is adequate for a number of applications, it does not perform quite as well as previously-described overcoated trilayer versions (cf. data in FIG. 15 tested under similar test conditions as that in FIG. 14). Some possible causes for this discrepancy in performance will now be discussed.

First, it is well known that the properties of deposited thin films depend strongly on the character of the surface on which they are deposited. By reversing the order of the films to be deposited, the nucleating and growth process would be very different, and the resulting film would, therefore, behave very differently. For example, the reflecting layer of the present reverse trilayer sample is not as smooth as the reflecting layer deposited in the normal order. The difference in reflectivity is shown in FIG. 16 where the reflecting layer of the reverse trilayer exhibits scattering loss. The scattering loss is more pronounced in the shorter wavelength region. This scattering loss will contribute to a difference in the performance.

Another phenomenon is shown in FIG. 17 where the reflecting layer is understood as physically deformed during the writing process. This can contribute to further scattering or detuning losses of the trilayer. However, the reflecting layer may be bonded to a firmer surface so that the deformation of reflecting layer would be minimized.

Another contributing cause of the lower sensitivity may be the glass substrate (13-SB or 17-SB). Although the described gold trilayer is more compatible with the "incontact, hard" overcoat than with normal ablative hole forming mechanism, some flexibility of the overcoat may still be desirable. A simple rigid glass substrate may restrict the hole formation process a bit more than organic overcoat.

--Summing:

In conclusion, I have discussed the various potential advantages of the "reverse trilayer" concept which can bring down the cost of the optical disk significantly. This concept requires a hole-formation process compatible with "incontact overcoat" means such as the described gold trilayer media.

A salient aspect of this invention, then, is to make a "substrate thickness" also function as a "protective layer" (e.g., like prior art overcoatings).

In my "reverse trilayer" design, the overcoat and subbing layers may be eliminated. In addition, a cheaper organic-substrate can be used in place of a polished aluminum substrate. Also, servotrack and address information can be replicated in the plastic substrate, eliminating the process of laser servowriting. These advantages can lead to a substantial reduction in the cost of disk production.

Considering a flexible web as the substrate, even more significant cost reduction for the disk production can be realized by the following considerations.

1. Possibility of high throughput continuous web coating process;

2. Possibility of continuous process control system - unlike a "batch-processing" where performance may vary from disk to disk;

3. Less handling and contamination due to the human factor which leads to better, defect-free disks,

4. Since throughput is high, and a lot of processing can be completed inside the vacuum chamber, less expensive cleanroom facilities are required; and

5. Disks with any desirable dimension can be stamped out. Also, it is interesting to note it may be possible to stamp out simultaneously, for example, a six-inch disk within a 14" disk without additional cost, as shown in FIG. 11.

There is yet another possibility to lower the cost of the disk. For a two-sided disk, as shown in FIG. 9, a common reflecting layer may be used. This way one can produce a two-sided disk in one pumpdown as well as eliminate one reflecting layer, which could be desirable, especially if gold is selected as the reflector.

Of course, as above mentioned, I prefer to use the absorber layer as part of the "trilayer", e.g., an ultra-thin gold film on an anti-reflective (optical) "back-up", with the gold preferably in "island" or like discontinuous form (or other island-film absorber -- for general discussion of such thin films, see papers by S. Normann, T. Anderson, C. G. Granquist, D. Hunderi, Optical Properties of Discontinuous Gold Film, Phy. Rev. B., Vol. 18, No. 2, 15 July 1978, p. 674; P. Gadenne, Modifications of the Optical and Electrical Properties of Thin Gold Films as a Function of Structure during Deposition, Thin Solid Films, 57 (1979) 77-81).

It will be understood that the preferred embodiments described herein are only exemplary, and that the invention is capable of many modifications and variations in construction, arrangement and use without departing from the spirit of the invention.

Further modifications of the invention are also possible. For example, the means and methods disclosed herein are also applicable to other disk systems and the like. Also, the present invention is applicable for providing other like media for other forms of recording and/or reproducing systems, such as those in which data is recorded and reproduced thermally.

The above examples of possible variations of the present invention are merely illustrative. Accordingly, the present invention is to be considered as including all possible modifications and variations coming within the scope of the invention as defined by the appended claims.

What is claimed is:

1. A two-sided recording disk responsive to a write-radiation beam of prescribed energy and wavelength, this disk comprising:
a sealed memory unit comprising a clear substrate thickness transparent to said radiation beam and a pair of radiation-memory structures, each overlaid on one side of this substrate thickness.

2. The invention of claim 1 wherein the substrate thickness comprises a precisely-controlled defocusing-thickness of clear optical quality polymer.

3. The invention of claim 2 wherein the memory structure comprises a non-ablative island-absorber-film deposited on a surface of the polymer substrate plus an anti-reflective thickness overlaid on this absorber film, this polymer surface being adapted to enhance island deposition.

4. The invention of claim 3 wherein the anti-reflective thickness comprises a polymeric optical spacer and a reflector film.

5. The invention of claim 2 wherein rigid carrier means is coupled to said memory structure, opposite said substrate thickness which thus functions as a protective cap.

6.     The invention of claim 2 wherein the substrate polymer thickness is fashioned from a relatively thin, flat, flexible polymeric web, being cut-out therefrom in disk configuration.

7.     The invention of claim 2 wherein rigid carrier means is coupled to said memory structure, opposite said substrate thickness which thus functions as a protective cap; and wherein, on the opposite side of this carrier means, is attached a second identical memory unit.

8.     A dual recording disk responsive to a write-radiation beam of prescribed energy and wavelength, this disk comprising:
a pair of sealed memory units, each unit comprising a
        clear substrate thickness transparent to said
        radiation beam and a radiation-memory structure
        overlaid on this substrate thickness, the units
        being coupled back-to-back at the memory structure.

9.     The invention of claim 8 wherein each memory structure comprises a non-ablative island-absorber-film deposited on a surface of the polymer substrate plus an anti-reflective thickness overlaid on this absorber film, this polymer surface being adapted to enhance island deposition.

10.     The invention of claim 9 wherein each anti-reflective thickness comprises a polymeric optical spacer, with a common reflector film coupled between the units.

11.    A method of fabricating a recording disk responsive to a write-radiation beam of prescribed energy and wavelength, this method comprising: selecting a clear substrate thickness transparent to said radiation beam; and depositing a radiation-memory structure on both sides of this substrate thickness.

12.    The invention of claim 11 wherein the substrate thickness is selected to comprise a defocusing-thickness of clear polymer.

13.    The invention of claim 12 wherein the memory structure is deposited as a non-ablative island-absorber-film deposited on a nucleating surface of the polymer substrate, with an anti-reflective thickness overlaid on this absorber film, this polymer surface being adapted to enhance island deposition; this absorber film being compatible with an in-contact overcoat.

14.    The invention of claim 13 wherein the anti-reflective thickness is fashioned to comprise a polymeric optical spacer and a reflector film.

15.    The invention of claim 12 wherein rigid carrier means is coupled to said memory structure, opposite said substrate thickness which thus functions as a protective cap.

16.    The invention of claim 12 wherein the substrate polymer thickness is fashioned from a relatively thin, flat, flexible polymeric web, being cut-out therefrom in disk configuration.

17.    The invention of claim 5 wherein the carrier means comprises an aluminum disk and the absorber film is comprised of gold islands.

18.    The combination as recited in claim 1 wherein the substrate thickness is comprised of protective overcoat material.

19.    The combination as recited in claim 18 wherein the substrate material comprises a segment of a polymeric web.

20.    The combination as recited in claim 19 wherein the record disk is cut-out from said web.

21.    The combination as recited in claim 20 wherein a relatively large record disk is cut-out from the web to include a prescribed center-hole; and wherein a relatively small record disk is formed by the center-hole cut-out.

22.    The combination as recited in claim 16 wherein a relatively large record disk is cut-out from the web to include a prescribed center-hole; and wherein a relatively small record disk is formed by the center-hole cut-out.

23.    The combination as recited in claim 18 wherein a pair of such record disk modules are formed and then bonded together at their reflector layers to form a double record unit.

24.    The combination as recited in claim 23 wherein only one such disk module includes a reflector layer.

25.    The combination as recited in claim 13 wherein the absorber film comprises gold.

26.    The combination as recited in claim 16 wherein successive such disks are cut-out from such a web presented in continuous sheet form.

27.    The disk of claim 1 comprised of a pair of such memory units, each comprising such a substrate-thickness with such a memory structure disposed on one side thereof, the two units being bonded together at said respective memory structures.

28.    The combination as recited in claim 27 wherein the memory structures are bonded to a common backing.

29.    The combination as recited in claim 27 wherein the substrate thickness comprises a precisely-controlled defocusing-thickness of clear optical quality polymer; and the memory structure comprises a non-ablative island-absorber-film deposited on a surface of the polymer substrate plus an anti-reflective thickness overlaid on this absorber film, this polymer surface being adapted to enhance island deposition; and the anti-reflective thickness comprises a polymeric optical spacer and a reflector film.

30.    The combination as recited in claim 29 wherein
the memory structures are bonded together at their
respective reflector films.

31.    The combination as recited in claim 30 wherein
the memory structures are so bonded together but only
one includes a reflector film.

32.    The combination as recited in claim 2 wherein
a first such memory structure is disposed on said
substrate thickness; then a second like memory structure
is overlaid, backwards, atop the first memory structure
and bonded thereto, and is over-laid with a protective
coating thickness.

33.    The combination as recited in claim 32 wherein
said second memory structure comprises a spacer layer,
then an absorber layer laid over the reflector layer
of the first memory structure.

**FIG.1.**

Labels in FIG.1: 100-OC, (CP), (OC-B), (OC-A), 115, 114, (114-I), 113, 107, 112-S, 112

**FIG.2.**

TEFLON DIELECTRIC 114
REFLECTOR 113
GOLD ABSORBER 115
(CP)
POLYMER OVERCOAT 180μm THICK 100-OC
14" ALUMINUM DISK 112
POLYMER SUBBING LAYER 112-S

**FIG.3.**

OPTIONAL THERMAL PLASTIC COATER TC
EMBOSSING ROLL ER
ww
dd

# FIG.4.

M

r

sp

a

} O-S

sm(Optional)

w

# FIG.5.

WRITE BEAM   READ BEAM   DUST   WRITE   READ

CLEAR WEB w

READ AFTER WRITE

SUBBING LAYER sm

ABSORBER a

TRILAYER O-S

(b)

DIELECTRIC sp

REFLECTOR r

ADHESIVE a–s

M

CARRIER C

# FIG. 6.

## ONE-SIDED DISK CONSTRUCTION.

## FIG. 6A.

| PROTECTION BACKING | |
| REFLECTING | |
| SPACER | $0-S$ |
| ABSORBER | |
| (OPT.) SUBBING | |
| CLEAR SUBSTRATE | $\omega$ |

$M$

## FIG. 6B.

| BACKING | $C$ |
| ADHESIVE | $A-S$ |
| REFLECTING | $r$ | |
| SPACER | $sp$ | $0-S$ |
| ABSORBER | $a$ | |
| (OPT.) SUBBING | $sm$ |
| CLEAR SUBSTRATE | $\omega$ |

$M$

## FIG. 9.

$\downarrow B_2$

| OC | OVERCOAT (SPIN COATED OR LAMINATED) | CLEAR |
| $S-A_2$ | ABSORBING | $A_1$ | $T_1$ |
| | SPACER | | |
| RF | REFLECTOR | |
| $S-A_1$ | SPACER | | $T_2$ |
| | ABSORBING | $A_2$ | |
| $Sm$ | SUBBING (OPTIONAL) | |
| $SB$ | CLEAR SUBSTRATE | |

$\uparrow B_1$

0144210

# FIG.7.

READ / WRITE LASER BEAM #2

$B_2$

| CLEAR SUBSTRATE |
| (OPTIONAL) SUBBING |
| ABSORBING |
| SPACER |
| REFLECTING |
| ADHESIVE                 a-2 |
| MECH. BACKING (BLANK)    -C-B |
| ADHESIVE                 a-1 |
| REFLECTING |
| SPACER |
| ABSORBING |
| (OPTIONAL) SUBBING |
| CLEAR SUBSTRATE |

$M_2$

$O-S_2$

$O-S_1$

$M_1$

BONDING TO COMMON BACKING CB

$B_1$

READ / WRITE LASER BEAM #1

0144210

# FIG. 8.

READ / WRITE LASER BEAM

$\downarrow \sim B_2$

| | |
|---|---|
| CLEAR SUBSTRATE $\underline{SS}_2{}'$ | |
| (OPTIONAL) SUBBING LAYER | $\} M_2{}'$ |
| ABSORBING | |
| SPACER | |
| REFLECTOR $\underline{RR}_2$ | |
| $\underline{AA}$ ADHESIVE | BOND TOGETHER |
| REFLECTOR $\underline{RR}_1$ | |
| SPACER | |
| ABSORBING | $\} M_1{}'$ |
| (OPTIONAL) SUBBING | |
| CLEAR SUBSTRATE $\underline{SS}_1{}'$ | |

$\uparrow \sim B_1$

READ / WRITE LASER BEAM

# FIG.10.

STAMP

WEB MOTION

DIE S-D

WEB Wa

# FIG.11.

14" DISK Da

6" DISK Db

W'

# FIG.12.

OPTIONAL THERMAL PLASTIC COATER TC

EMBOSSING die ED

ww

dd

# FIG. 13.

REVERSE TRILAYER STRUCTURE.

REFLECTOR — 13-N
SPACER — 13-S
ABSORBER — 13-A
CLEAR SUBSTRATE — 13-SB

13-T

READ / WRITE BEAM

# FIG. 17.

DEFORMATION OF THE REFLECTOR LAYER OF REVERSE TRILAYER.

REFLECTOR — 17-R
SPACER — 17-S
ABSORBER — 17-A
CLEAR SUBSTRATE — 17-SB

READ / WRITE BEAM

# FIG.16.

RATIO OF REFLECTIVITY OF REFLECTING LAYER OF THE
PRESENT REVERSE TRILAYER SAMPLE TO THAT OF THE
REFLECTOR OF THE NORMAL TRILAYER.   THE MEASUREMENT
OF REFLECTIVITY OF THE REVERSE TRILAYER  SAMPLE
WAS MADE FROM THE BACKSIDE OF THE SAMPLE.

# FIG.14.

## SENSITIVITY OF THE PRESENT REVERSE TRILAYER SAMPLE.

HeNe Laser
40 nsec Exposure Time
21.5 m/sec. Linear Speed
5.91 Baseline Reflectivity
S/N =25dB at 10mW Writepower
Broadband

# FIG.15.

## SENSITIVITY OF PREVIOUSLY DISCLOSED BURROUGHS TRILAYER WITH 7 MIL POLYMER OVERCOAT.

HeNe Laser
40 nsec Exposure Time
21.5 m/sec Linear Speed
6.25   Baseline Reflectivity
S/N=32dB at 10 mW Writepower
Broadband